# EUROPEAN PATENT SPECIFICATION

(11) **EP 4 177 468 B1**
(45) Date of publication and mention of the grant of the patent: **09.07.2025**
(21) Application number: 21832671.8
(22) Date of filing: 21.06.2021
(51) Int. Cl.: F04C 2/08, F04C 14/08, F04C 14/28, F04C 15/00, F04B 17/03, F04B 49/06

(54) **HYDROSTATIC PRESSURE UNIT**
HYDROSTATISCHE DRUCKEINHEIT
UNITÉ À PRESSION HYDROSTATIQUE

(30) Priority: 03.07.2020 JP 2020115853
(43) Date of publication of application: 10.05.2023
(73) Proprietor: Daikin Industries, Ltd., Osaka-Shi, Osaka 530-0001 (JP)
(72) Inventor: YOKOYAMA, Takahiro, Osaka-shi, Osaka 530-8323 (JP); MIYAJIMA, Takayuki, Osaka-shi, Osaka 530-8323 (JP)
(74) Representative: Goddar, Heinz J.
(86) International application number: PCT/JP2021/023420
(87) International publication number: WO 2022/004466

(56) References cited:
- EP-A1- 1 871 003
- WO-A1-2019/142301
- JP-A- 2001 090 669
- JP-A- H07 285 744
- JP-A- H07 285 744
- JP-A- H11 349 236
- US-A1- 2020 040 889

## Description

### [Technical Field]

The present disclosure relates to a fluid pressure unit.

### [Background Art]

When a hydraulic pump is driven by a motor, it is known that pulsations occur in a discharge pressure of the hydraulic pump due to a discharge fluctuation of the hydraulic pump and a torque ripple of the motor (refer to, for example, PTL 1). 1A

### [Citation List]

### [Patent Literature]

[PTL 1]
Japanese Patent Application Laid-Open No. 2001-90669

### [Summary of the Invention]

### [Problem to be Solved by the Invention]

If a motor that drives a pump is controlled by an inverter based on a detected pressure and/or flow rate of a fluid discharged from the pump when there is a pulsation in the discharge pressure of the pump, the stability of the pressure JP H07 285744 A discloses a fluid pressure unit comprising an inverter, a motor controlled by the inverter, a pump driven by the motor to discharge a hydraulic fluid, a detector configured to detect the pressure of the fluid, or a flow rate of the fluid, a controller configured to control the inverter such that a pressure of the pump or a flow rate of the pump, becomes a predetermined value, based on a detected value by the detector, and a suppressor configured to suppress a change in an output of the inverter caused by a pulsation frequency component of the fluid included in the detected value.
WO 2019/ 142301 Al is a technological background document and relates to a drive device, fluid utilization device and air conditioner.
and/or flow rate of the fluid discharged from the pump may be reduced.

The present disclosure provides a fluid pressure unit capable of suppressing a decrease in the stability of the pressure and/or flow rate of the fluid discharged from the pump.

### [Means to Solve the Problem]

The present disclosure provides a fluid pressure unit that includes an inverter, a motor controlled by the inverter, a pump driven by the motor to discharge a fluid, a detector configured to detect a pressure of the fluid, a flow rate of the fluid, or both, a controller configured to control the inverter such that a pressure of the pump, a flow rate of the pump, or both becomes a predetermined value based on a detected value by the detector, and a suppressor configured to suppress a change in an output of the inverter caused by a pulsation frequency component of the fluid included in the detected value.

According to this configuration, it is possible to suppress a decrease in stability of the pressure and/or flow rate of the fluid discharged from the pump.

In the above-described fluid pressure unit, the suppressor may reduce an amount of suppression at a frequency component that is higher than the pulsation frequency component in comparison with an amount of suppression at the pulsation frequency component.

According to this configuration, a responsiveness of the motor and the pump can be suppressed in a frequency range that is higher than the pressure pulsation frequency of the fluid.

In the above-described fluid pressure unit, the suppressor may be a band stop filter in which a frequency of the pulsation frequency component is included in a stop band.

According to this configuration, a responsiveness of the motor and the pump can be suppressed in a frequency range other than the stop band.

In the above-described fluid pressure unit, the band stop filter may be a notch filter in which the frequency of the pulsation frequency component is included in the stop band.

According to this configuration, a responsiveness of the motor and the pump can be further suppressed in a frequency range other than the stop band.

In the above-described fluid pressure unit, the stop band may vary according to a rotational speed of the pump.

According to this configuration, a decrease in stability of the pressure and/or flow rate of the fluid discharged from the pump can be suppressed even when the rotational speed of the pump changes.

In the above-described fluid pressure unit, the stop band may vary according to a product of the rotational speed of the pump and a number of teeth of the pump.

According to this configuration, a decrease in stability of the pressure and/or flow rate of the fluid discharged from the pump can be suppressed accurately even when the rotational speed of the pump changes.

In the above-described fluid pressure unit, the detector may include a pressure sensor to detect the pressure of the fluid.

According to this configuration, it is possible to accurately suppress a decrease in stability of the pressure of the fluid discharged from the pump.

In the above-described fluid pressure unit, the detector may include a flow rate sensor to detect the flow rate of the fluid.

According to this configuration, it is possible to accurately suppress a decrease in stability of the flow rate of the fluid discharged from the pump.

### [Brief Description of Drawings]

FIG. 1 is a diagram illustrating a configuration example of a system including a fluid pressure unit according to an embodiment;
FIG. 2 is a diagram illustrating a stable pressure waveform when an inverter is controlled to cancel a pulsation of a discharge pressure of a pump;
FIG. 3 is a diagram illustrating an unstable pressure waveform when the inverter is controlled to cancel the pulsation of the discharge pressure of the pump;
FIG. 4 is a diagram illustrating an example of a change in an output of an inverter caused by a pulsation frequency component of a fluid included in a detected value;
FIG. 5 is a diagram illustrating an example in which the change in the output of the inverter caused by the pulsation frequency component of the fluid included in the detected value is suppressed;
FIG. 6 is a diagram illustrating a pressure waveform when the change in the output of the inverter caused by the pulsation frequency component of the fluid included in the detected value is suppressed;
FIG. 7 is a diagram illustrating a first configuration example of a fluid pressure unit;
FIG. 8 is a diagram illustrating an example of a pressure-flow rate map; and
FIG. 9 is a diagram illustrating a second configuration example of a fluid pressure unit.

### [Mode for Carrying Out the Invention]

Hereinafter, embodiments will be described.

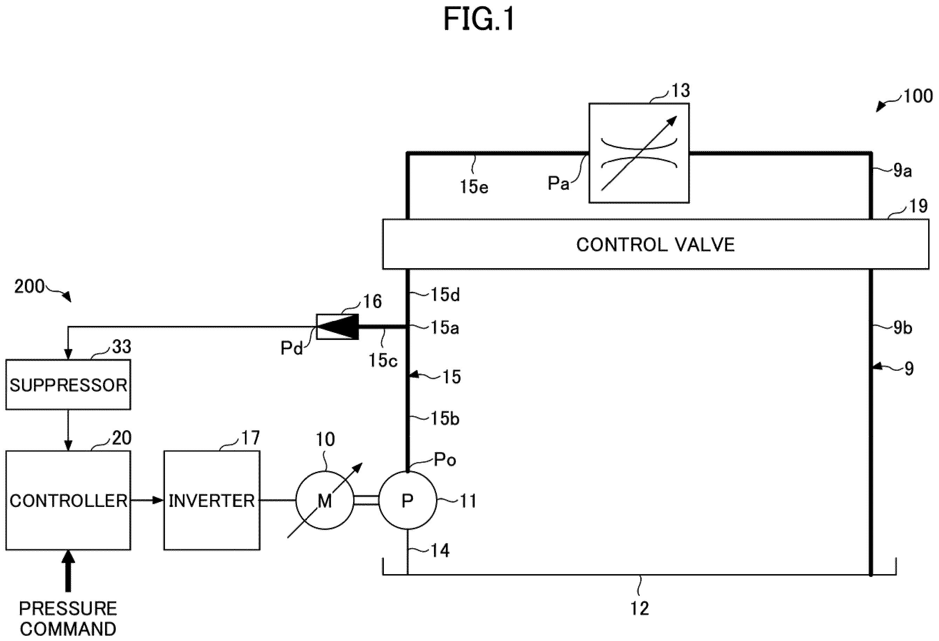

FIG. 1 is a diagram illustrating a configuration example of a system including a fluid pressure unit according to an embodiment. A system 100 illustrated in FIG. 1 causes an actuator 13 to perform a desired operation by a fluid supplied from a fluid pressure unit 200. The system 100 includes the fluid pressure unit 200, a control valve 19 and the actuator 13. The actuator 13 is an example of a load operated by a fluid supplied from the fluid pressure unit 200. The actuator 13 is connected to the fluid pressure unit 200 through a control valve 19.

The fluid pressure unit 200 drives a pump 11 by a motor 10 controlled by an inverter 17 to supply the fluid from a tank 12 to the actuator 13, such as a cylinder. If the fluid is oil, the fluid pressure unit is also referred to as a hydraulic unit. The fluid is not limited to liquids, such as oils, and may be a gas.

The fluid pressure unit 200 includes the inverter 17, the motor 10, the pump 11, the tank 12, the pressure sensor 16, a controller 20, and a suppressor 33.

The inverter 17 controls the motor 10 according to a command (i.e., control signal) supplied from the controller 20. The inverter 17 is a circuit for regulating the power supply to the motor 10 and includes, for example, a three-phase bridge circuit that outputs a three-phase alternating current.

The motor 10 is a synchronous motor controlled by the inverter 17 and is driven by an alternating current output from the inverter 17.

The pump 11 is driven by the motor 10 controlled by the inverter 17 to discharge a fluid. For example, the pump 11 draws in and compresses the fluid from the tank 12 through a suction path 14 and discharges the compressed fluid to the actuator 13 through a discharge path 15 and the control valve 19. The fluid output from the actuator 13 returns to the tank 12 through the control valve 19 and a return path 9.

In the example illustrated in FIG. 1, the discharge path 15 includes discharge pipes 15b, 15c, 15d, and 15e through which the fluid discharged from the pump 11 passes. The discharge path that passes through the discharge pipes 15b and 15c on the fluid pressure unit 200 side and the discharge path that passes through the discharge pipes 15d and 15e on the actuator 13 side are connected to each other at a connection point 15a. On the other hand, the return path 9 includes return pipes 9a and 9b through which the fluid output from the actuator 13 passes.

For example, the discharge pipes 15b and 15c have higher rigidity than the discharge pipes 15d and 15e. As an example, the discharge pipes 15d and 15e are hoses formed of an elastic body such as rubber or resin, and the discharge pipes 15b and 15c are pipes formed of a metal block that is more rigid than the elastic body. The return path 9 (the return pipes 9a and 9b) may be made of the same material as the discharge path 15 or a different material.

The pressure sensor 16 is an example of a detecting unit for detecting the pressure of the fluid discharged from the pump 11, and outputs the pressure of the detected fluid (hereinafter, also referred to as a detected pressure Pd). The pressure sensor 16 detects the pressure of the fluid flowing into the discharge path 15. In this example, the pressure of the fluid discharged from the pump 11 to the discharge pipe 15b of the discharge path 15 is detected through the discharge pipe 15c.

The controller 20 outputs a command for controlling the inverter 17 such that the pressure (a discharge pressure Po) of the fluid discharged from the pump 11 becomes a predetermined value, based on a detected pressure value (i.e., the detected pressure Pd in the example illustrated in FIG. 1) by the pressure sensor 16. For example, the controller 20 operates the inverter 17 to control the motor 10 such that the discharge pressure Po of the pump 11 becomes a target pressure, based on the detected pressure value by the pressure sensor 16. The target pressure is specified, for example, by a pressure command supplied from outside the controller 20. Further, the pressure at the input end of the actuator 13 from the pump 11 through the discharge path 15 is called a load pressure Pa.

When the pump is driven by the motor 10, the detected pressure value by the pressure sensor 16 may include a pressure pulsation frequency component of the fluid because the discharge pressure Po of the pump 11 is pulsed by the drive of the pump 11. In this case, when the controller 20 controls the inverter 17 based on the detected pressure value by the pressure sensor 16, the stability of the discharge pressure Po of the pump 11 may get reduced due to the pressure pulsation frequency component included in the detected pressure value.

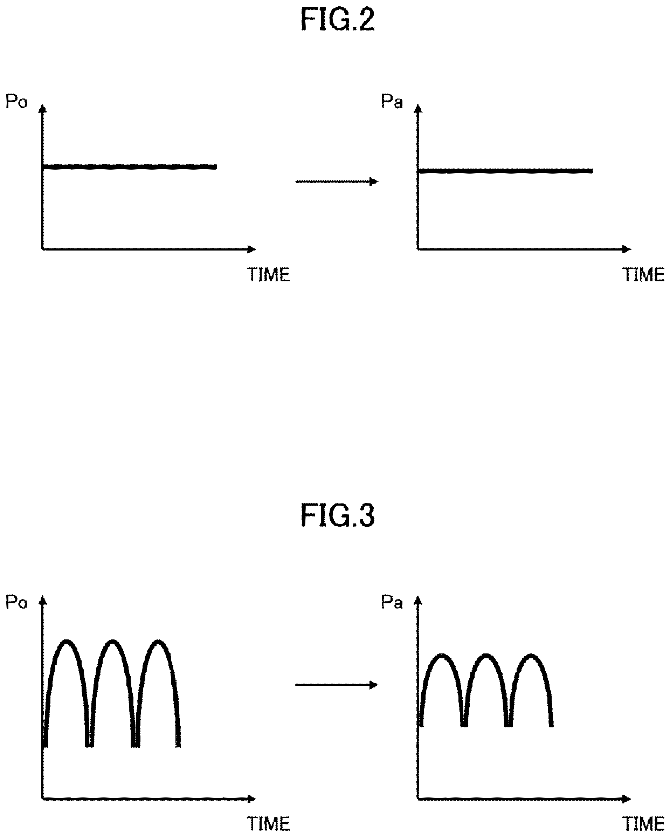

For example, by performing a method of controlling the inverter 17 so as to cancel the pulsation of the discharge pressure Po (i.e., a pulsation compensation method) based on the detected pressure value by the pressure sensor 16, the controller 20 can suppress the pulsation of the discharge pressure Po and the load pressure Pa as illustrated in FIG. 2. However, in the pulsation compensation method, when the frequency band of the pulsation of the discharge pressure Po increases, the control band of the inverter 17 by the controller 20 is insufficient, the discharge pressure Po and the load pressure Pa become unstable may become unstable as illustrated in FIG. 3. For example, when the controller 20 controls the inverter 17 to cancel pulsations above the control band, a command (control signal) supplied from the controller 20 to the inverter 17 may vibrate and cause the discharge pressure Po and the load pressure Pa to hunt.

The fluid pressure unit 200 according to an embodiment illustrated in FIG. 1 includes a suppressor 33 configured to suppress the change in the output of the inverter 17 caused by the pressure pulsation frequency component of the fluid included in the detected pressure value by the pressure sensor 16. According to the suppressor 33, since the change in the output of the inverter 17 caused by the pressure pulsation frequency component of the fluid included in the detected pressure value by the pressure sensor 16 is suppressed, a decrease in stability of the discharge pressure Po and the load pressure Pa of the pump 11 can be suppressed.

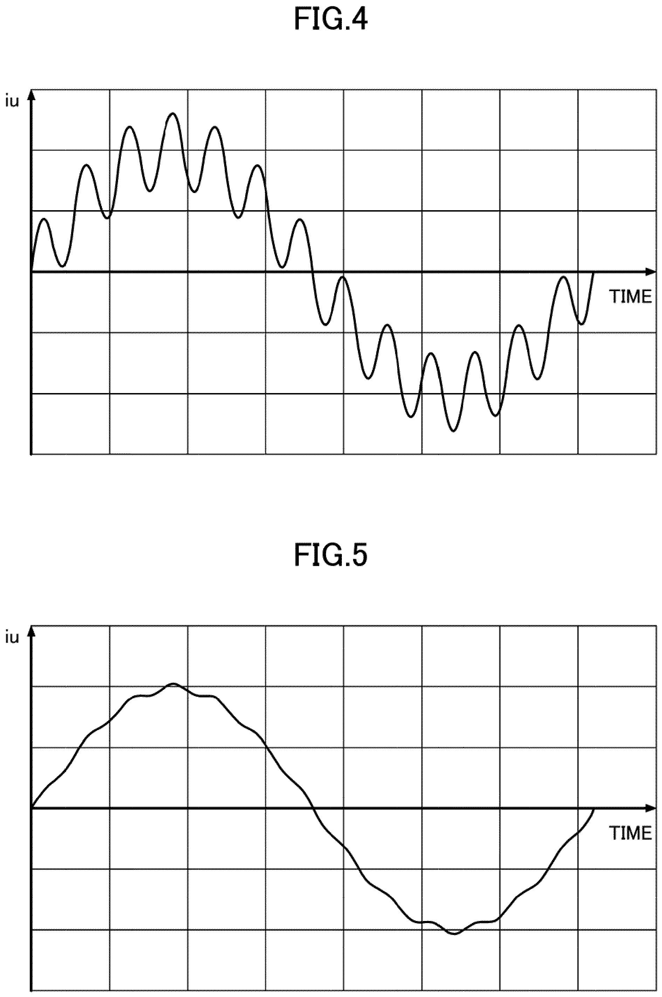

FIG. 4 is a diagram illustrating an example of the change in the output of the inverter caused by the pulsation frequency component of the fluid included in the detected value. When the controller 20 controls the inverter 17 based on the detected pressure value by the pressure sensor 16, the pressure pulsation frequency component of the fluid included in the detected pressure value by the pressure sensor 16 may superimpose on the alternating current output from the inverter 17. FIG. 4 illustrates a waveform in which the pressure pulsation frequency component of the fluid included in the detected pressure value by the pressure sensor 16 is superimposed on an AC current iu of one phase output from the inverter 17. A similar pressure pulsation frequency component is superimposed on the AC current of other phases (for example, AC current iv, AC current iw) output from inverter 17.

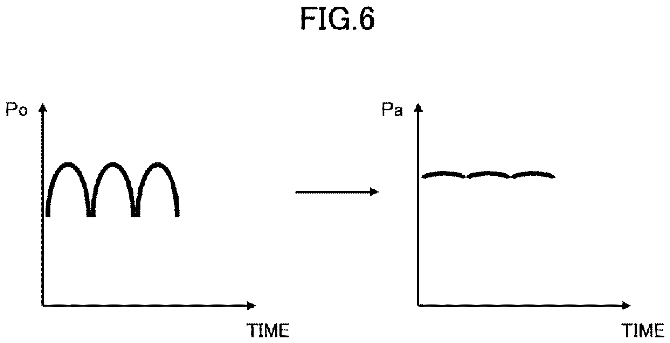

Since the suppressor 33 illustrated in FIG. 1 suppresses the change in the output AC current of the inverter 17 caused by the pressure pulsation frequency component of the fluid included in the detected pressure value by the pressure sensor 16, the pressure pulsation frequency component superimposed on the output AC current can be suppressed as illustrated in FIG. 5. Since the inverter 17 is not controlled to cancel the pulsation of the discharge pressure Po, a slight pulsation may remain in the discharge pressure Po, as illustrated in FIG. 6. However, the load pressure Pa at the input end of the actuator 13 becomes substantially constant because the pressure pulsation is attenuated in the discharge path from the connection point 15a to the actuator 13.

The suppressor 33 may reduce the suppression amount at a frequency component higher than the pressure pulsation frequency component of the fluid included in the detected pressure value by the pressure sensor 16 in comparison with the suppression amount at the pressure pulsation frequency component of the fluid. According to this configuration, a reduction in a responsiveness of the motor 10 and the pump 11 can be suppressed in a frequency range that is higher than the pressure pulsation frequency of the fluid. For example, an abrupt operation of the motor 10 and the pump 11 can be suppressed from being inhibited.

The suppressor 33 may be a band stop filter that includes, in a stop band, the frequency of the pressure pulsation frequency component of the fluid included in the detected pressure value by the pressure sensor 16. According to this configuration, the reduction in the responsiveness of the motor 10 and the pump 11 can be suppressed in the frequency range other than the stop band.

The band stop filter may be a notch filter that includes, in the stop band, the frequency of the pressure pulsation frequency component of the fluid included in the detected pressure value by the pressure sensor 16. Since the signal in the frequency range other than the stop band does not readily attenuate, the notch filter can further suppress the reduction in the responsiveness of the motor 10 and the pump 11 in the frequency range other than the stop band.

The stop band of the bandpass filter or notch filter may vary depending on a rotational speed of the pump 11. According to this configuration, even when the rotational speed of the pump 11 changes, a decrease in stability of the discharge pressure Po of the pump 11 can be suppressed by being adjusted to an appropriate stop band in accordance with the rotational speed.

The stop band may vary depending on the product of the number of revolutions of the pump 11 and the number of teeth of the pump 11. According to this configuration, even when the rotational speed of the pump 11 changes, a decrease in stability of the discharge pressure Po of the pump 11 can be accurately suppressed.

The number of teeth of the pump 11 is typically about 9 to 10. For example, if the pump 11 is a positive displacement pump, a pulsation corresponding to the product of the rotational speed of the pump 11 and the teeth number of the pump 11 occurs in the discharge pressure Po. FIG. 4 illustrates a waveform in which the pulsation frequencies of 5 to 100 [Hz] × 13 [sheets] are superimposed on the output AC current of the inverter 17 when the number of teeth of the pump 11 is 13.

The suppressor 33 may be configured by hardware or in cooperation with hardware and software.

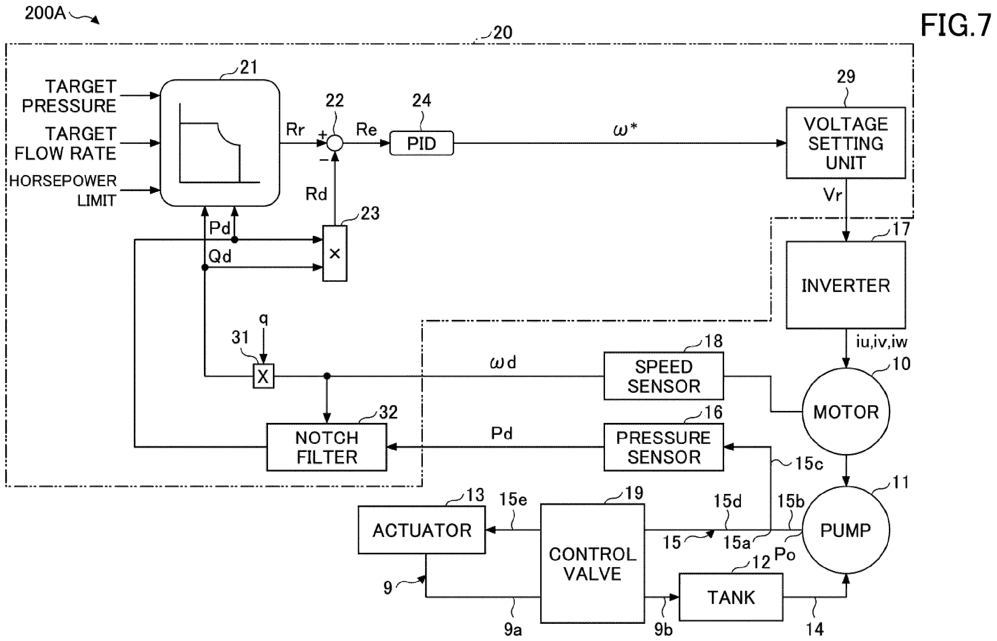

FIG. 7 is a diagram illustrating a first configuration example of the fluid pressure unit. A configuration similar to that illustrated in FIG. 1 among the configurations illustrated in FIG. 7 is omitted. A fluid pressure unit 200A illustrated in FIG. 7 may include a speed sensor 18. The speed sensor 18 detects a speed of the motor 10 and outputs the detected speed ωd.

The controller 20 includes a notch filter 32 that includes the frequency of the pressure pulsation frequency component included in the detected pressure Pd in the stop band. The notch filter 32 changes the stop band (notch frequency) in accordance with the speed ωd detected by the speed sensor 18. Alternatively, the notch filter 32 changes the stop band (notch frequency) in accordance with a command speed ω* (more preferably, an old speed ω^ before the unit time of the command speed ω*). According to these configurations, the notch filter 32 can adjust the stop band to a frequency including the pressure pulsation frequency component that varies in accordance with the rotational speed of the pump 11, thereby suppressing a decrease in the stability of the pressure and/or flow rate of the fluid discharged from the pump 11.

The controller 20 controls the operation of the inverter 17 that drives the motor 10 based on the pressure Pd detected by the pressure sensor 16, a flow rate Qd calculated based on the speed ωd detected by the speed sensor 18, and a map 21 (also referred to as a PQ map) comprising a target pressure, a target flow rate, and a horsepower limit. The flow rate Qd calculated by the controller 20 represents an estimated value of the flow rate Q of the fluid discharged from the pump 11 to the discharge path 15.

The controller 20 multiplies the detected speed ωd [1/s] and a volume q [m³] of the pump 11 by a multiplier 31 to determine the flow rate Qd [m³/s]. The volume q of the pump 11 is constant and therefore fixed. The controller 20 derives a target horsepower Rr from the PQ map 21 based on the target pressure Pr supplied from the outside and the flow rate Qd calculated by the multiplier 31. On the other hand, the controller 20 multiplies the pressure Pd detected by the pressure sensor 16 and the flow rate Qd calculated by the multiplier 31 by a multiplier 23 to derive the detected horsepower Rd (= Pd × Qd). The controller 20 derives an error Re (= Rr - Rd) between the target horsepower Rr and the detected horsepower Rd by a subtractor 22. The controller 20 includes a PID control unit 24 that derives the command speed ω* which brings the error Re close to zero by a PID control (in PID, P refers to proportional, I refers to integral, and D refers to derivative). The command speed ω* may be derived by PI control.

The controller 20 may calculate the old speed ω^ [1/s] before the unit time (for example, control period) by delaying the command speed ω* with a delay device (not illustrated), and may calculated the flow rate Qd [m³/s] by multiplying the old speed ω^ by the volume q [m³] of the pump 11 with the multiplier 31.

The controller 20 includes a voltage setting unit 29 for setting a command voltage Vr for driving the inverter 17 that drives the motor 10 based on the command speed ω*.

The functions of each unit, such as the PID control unit 24, provided by the controller 20 are implemented by operating a processor (for example, a central processing unit (CPU) by a program that is stored in the memory readably.

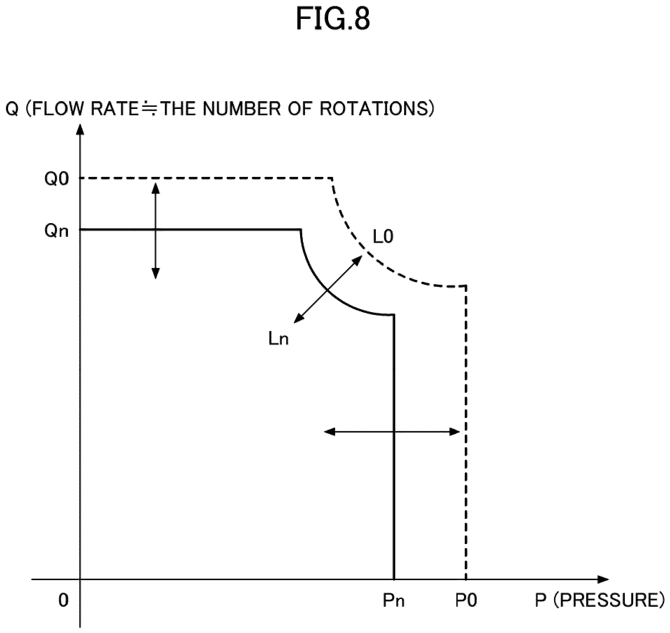

FIG. 8 is a diagram illustrating an example of a pressure-flow rate map. The PQ map 21 includes a maximum flow rate line corresponding to the maximum set flow rate Q0, a maximum horsepower curve comprising a curve corresponding to the maximum horsepower limit L0, and a maximum pressure line corresponding to the maximum set pressure P0. The flow rate Q corresponds to the product of the rotational speed ω (the number of rotations) of the motor 10 and the volume q of the pump 11 and is therefore equivalent to the rotational speed ω.

The controller 20 operates the inverter 17 that drives the motor 10 such that the pressure Pd detected by the pressure sensor 16 and the flow rate Qd calculated based on the detected speed ωd or the command speed ω* operate on a line consisting of a set pressure Pn, a set flow rate Qn, and a set horsepower curve Ln in the PQ map 21.

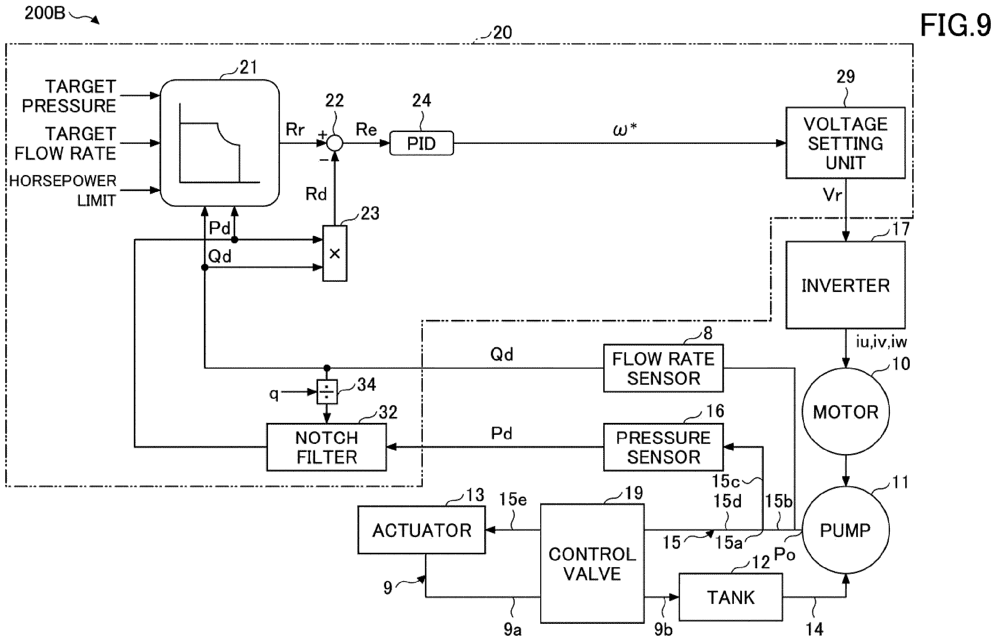

FIG. 9 is a diagram illustrating a second configuration example of a fluid pressure unit. A configuration similar to the configuration illustrated in FIG. 1 and FIG. 7 among the configurations illustrated in FIG. 9 is omitted. A fluid pressure unit 200B illustrated in FIG. 9 includes a flow rate sensor 8. The flow rate sensor 8 is an example of a detector that detects the flow rate Q of the fluid discharged from the pump 11 to the discharge path 15, and outputs the flow rate Qd of the detected fluid (hereinafter, also referred to as the detected flow rate Qd). The flow rate sensor 8, for example, detects the flow rate Q of the fluid flowing into the discharge pipe 15b of the discharge path 15, but may detect the flow rate Q of the fluid flowing into the discharge pipe 15d or the discharge pipe 15e. The controller 20 calculates the detection speed ωd [1/s] by dividing the detection flow rate Qd [m³/s] by the volume q[m³] by the divider 34.

The controller 20 includes a notch filter 32 that includes the frequency of the pulsation frequency component included in the detected pressure Pd in the stop band. The notch filter 32 changes the stop band (notch frequency) in accordance with the speed ωd detected by a divider 34 of the controller 20. According to this configuration, the notch filter 32 can adjust the stop band to a frequency including the pulsation frequency component that varies with the rotational speed of the pump 11, thereby suppressing a decrease in stability of the pressure and/or flow rate of the fluid discharged from the pump 11.

Although a description has been given of the embodiments, it may be understood that various modifications may be made to the configurations and details thereof, without departing from the subject matter and scope of the claims.

For example, the controller 20 may control the inverter such that the pressure and/or flow rate of the pump 11 are at a predetermined value based on the flow rate value detected by the flow rate sensor 8. This is because the controller 20 can calculate the pressure of the fluid from the flow rate detected by the flow rate sensor 8 by using a pipeline resistance of the discharge path 15.

This international application claims priority under Japanese Patent Application No. 2020-115853, filed on July 3,.

### [Description of Symbols]

- 8: flow rate sensor
- 9: return path
- 10: motor
- 11: pump
- 12: tank
- 13: actuator
- 14: suction path
- 15: discharge path
- 16: pressure sensor
- 17: inverter
- 18: speed sensor
- 19: control valve
- 20: controller
- 32: notch filter
- 33: suppressor
- 100: system
- 200, 200A, 200B: fluid pressure unit

## Claims

1. A fluid pressure unit (200;200A;200B) comprising:
an inverter (17);
a motor (10) controlled by the inverter (17);
a pump (11) driven by the motor (10) to discharge a fluid;
a detector configured to detect a pressure of the fluid, a flow rate of the fluid, or both;
a controller (20) configured to control the inverter (17) such that a pressure of the pump (11), a flow rate of the pump, or both becomes a predetermined value, based on a detected value by the detector; and
a suppressor (33) configured to suppress a pulsation frequency component that is superimposed on an output alternating current of the inverter (17) caused by the pulsation frequency component of the fluid included in the detected value, wherein the pulsation frequency component is higher than the output alternating current.

2. The fluid pressure unit (200;200A;200B) according to claim 1, wherein the suppressor (33) reduces an amount of suppression at a frequency component that is higher than the pulsation frequency component in comparison with an amount of suppression at the pulsation frequency component.

3. The fluid pressure unit (200;200A;200B) according to claim 2, wherein the suppressor (33) is a band stop filter in which a frequency of the pulsation frequency component is included in a stop band.

4. The fluid pressure unit (200A;200B) according to claim 3, wherein the band stop filter is a notch filter in which the frequency of the pulsation frequency component is included in the stop band.

5. The fluid pressure unit (200;200A;200B) according to claim 3 or 4, wherein the stop band varies according to a rotational speed of the pump (11).

6. The fluid pressure unit (200;200A;200B) according to claim 5, wherein the stop band varies according to a product of the rotational speed of the pump (11) and a number of teeth of the pump (11).

7. The fluid pressure unit (200;200A;200B) according to any one of claims 1 to 6, wherein the detector includes a pressure sensor (16) to detect the pressure of the fluid.

8. The fluid pressure unit (200B) according to any one of claims 1 to 6, wherein the detector includes a flow rate sensor (8) to detect the flow rate of the fluid.

## Patentansprüche

1. Fluiddruckeinheit (200; 200A; 200B), umfassend:
einen Inverter (17);
einen Motor (10), der durch den Inverter (17) gesteuert wird;
eine Pumpe (11), die durch den Motor (10) angetrieben wird, um ein Fluid abzugeben;
einen Detektor, der konfiguriert ist, um einen Druck des Fluids, eine Durchflussrate des Fluids oder beides zu detektieren;
eine Steuereinrichtung (20), die konfiguriert ist, um den Inverter (17) basierend auf einem durch den Detektor detektierten Wert derart zu steuern, dass ein Druck der Pumpe (11), eine Durchflussrate der Pumpe oder beides ein vorbestimmter Wert wird; und
eine Unterdrückungseinrichtung (33), die konfiguriert ist, um eine Pulsationsfrequenzkomponente zu unterdrücken, die einem Ausgangswechselstrom des Inverters (17) überlagert ist, der durch die Pulsationsfrequenzkomponente des Fluids verursacht ist, die in dem detektierten Wert enthalten ist, wobei die Pulsationsfrequenzkomponente höher als der Ausgangswechselstrom ist.

2. Fluiddruckeinheit (200; 200A; 200B) nach Anspruch 1, wobei die Unterdrückungseinrichtung (33) einen Unterdrückungsbetrag bei einer Frequenzkomponente, die höher als die Pulsationsfrequenzkomponente ist, im Vergleich zu einem Unterdrückungsbetrag bei der Pulsationsfrequenzkomponente reduziert.

3. Fluiddruckeinheit (200; 200A; 200B) nach Anspruch 2, wobei die Unterdrückungseinrichtung (33) ein Bandsperrfilter ist, in dem eine Frequenz der Pulsationsfrequenzkomponente in einem Sperrband enthalten ist.

4. Fluiddruckeinheit (200A; 200B) nach Anspruch 3, wobei das Bandsperrfilter ein Kerbfilter ist, in dem die Frequenz der Pulsationsfrequenzkomponente in dem Sperrband enthalten ist.

5. Fluiddruckeinheit (200; 200A; 200B) nach Anspruch 3 oder 4, wobei das Sperrband gemäß einer Drehzahl der Pumpe (11) variiert.

6. Fluiddruckeinheit (200; 200A; 200B) nach Anspruch 5, wobei das Sperrband gemäß einem Produkt der Drehzahl der Pumpe (11) und einer Anzahl von Zähnen der Pumpe (11) variiert.

7. Fluiddruckeinheit (200; 200A; 200B) nach einem der Ansprüche 1 bis 6, wobei der Detektor einen Drucksensor (16) enthält, um den Druck des Fluids zu detektieren.

8. Fluiddruckeinheit (200B) nach einem der Ansprüche 1 bis 6, wobei der Detektor einen Durchflussratensensor (8) enthält, um die Durchflussrate des Fluids zu detektieren.

## Revendications

1. Unité de pression de fluide (200 ; 200A ; 200B) comprenant :
un onduleur (17) ;
un moteur (10) commandé par l'onduleur (17) ;
une pompe (11) entraînée par le moteur (10) pour évacuer un fluide ;
un détecteur configuré pour détecter une pression du fluide, un débit du fluide ou les deux ;
un régulateur (20) configuré pour commander l'onduleur (17) de sorte qu'une pression de la pompe (11), un débit de la pompe, ou les deux, prennent une valeur prédéterminée, d'après une valeur détectée par le détecteur ; et
un suppresseur (33) configuré pour supprimer une composante de fréquence de pulsation superposée à un courant alternatif de sortie de l'onduleur (17), provoquée par la composante de fréquence de pulsation du fluide comprise dans la valeur détectée, la composante de fréquence de pulsation étant supérieure au courant alternatif de sortie.

2. Unité de pression de fluide (200 ; 200A ; 200B) selon la revendication 1, le suppresseur (33) réduisant un degré de suppression à une composante de fréquence supérieure à la composante de fréquence de pulsation par rapport à un degré de suppression à la composante de fréquence de pulsation.

3. Unité de pression de fluide (200 ; 200A ; 200B) selon la revendication 2, le suppresseur (33) étant un filtre coupe-bande dans lequel une fréquence de la composante de fréquence de pulsation est comprise dans une bande d'arrêt.

4. Unité de pression de fluide (200A ; 200B) selon la revendication 3, le filtre coupe-bande étant un filtre réjecteur dans lequel la fréquence de la composante de fréquence de pulsation est comprise dans la bande d'arrêt.

5. Unité de pression de fluide (200 ; 200A ; 200B) selon la revendication 3 ou 4, la bande d'arrêt variant en fonction d'un régime de la pompe (11).

6. Unité de pression de fluide (200 ; 200A ; 200B) selon la revendication 5, la bande d'arrêt variant en fonction d'un produit du régime de la pompe (11) et d'un nombre de dents de la pompe (11).

7. Unité de pression de fluide (200 ; 200A ; 200B) selon une quelconque des revendications 1 à 6, le détecteur comprenant un capteur de pression (16) pour détecter la pression du fluide.

8. Unité de pression de fluide (200B) selon une quelconque des revendications 1 à 6, le détecteur comprenant un capteur de débit (8) pour détecter le débit du fluide.
